# EUROPÄISCHE PATENTANMELDUNG

(11) **EP 4 725 760 A1**
(43) Veröffentlichungstag der Anmeldung: **15.04.2026**
(21) Anmeldenummer: 25208166.6
(22) Anmeldetag: 13.10.2025
(51) Int. Cl.: B60N 2/64

(54) **SITZKISSEN**

(30) Priorität: 14.10.2024 DE 102024129593
(71) Anmelder: König + Neurath AG, 61184 Karben (DE)
(72) Erfinder: Nebel, Stefan, 65189 Wiesbaden (DE)
(74) Vertreter: Wolf & Wolf Patentanwaltsgesellschaft mbH

(57) **Zusammenfassung**

Die Erfindung betriff ein Sitzkissen, umfassend einen zum Tragen eines sitzenden Menschen geeigneten Polsterkörper (1), der aus mindestens einem ersten und einem zweiten Polsterkörperteil (1.1, 1.2) gebildet ist, wobei der erste Polsterkörperteil (1.1) aus einem Fasermaterial gebildet ist, wobei der zweite, einen zentralen Sitzbereich des Polsterkörpers (1) ausfüllende Polsterkörperteil (1.2) aus einem Zusatzfasermaterial gebildet ist. Nach der Erfindung ist vorgesehen, dass der erste Polsterkörperteil (1.1) den zweiten Polsterkörperteil (1.2) ringförmig umschließend ausgebildet ist.

## Beschreibung

Die Erfindung betrifft ein Sitzkissen gemäß dem Oberbegriff des Patentanspruchs 1.

Ein Sitzkissen der eingangs genannten Art ist aus dem Patentdokument DE 10 2008 035 611 A1 und auch aus dem Patentdokument DE 10 2010 005 994 A1 bekannt.

Ein weiteres Sitzkissen dieser Art ist aus dem Patentdokument DE 10 2013 202 688 B4 bekannt. Dieses für einen Fahrzeugsitz vorgesehene Sitzkissen besteht dabei aus einem zum Tragen eines sitzenden Menschen geeigneten Polsterkörper, der aus mindestens einem ersten und einem zweiten Polsterkörperteil gebildet ist, wobei der erste Polsterkörperteil aus einem Fasermaterial gebildet ist. Ferner ist bei dieser Lösung vorgesehen, dass der zweite, einen zentralen Sitzbereich des Polsterkörpers ausfüllende Polsterkörperteil aus einem Schaumstoffmaterial gebildet ist. Außerdem sind die Polsterkörperteile, und dies gilt auch für das nachfolgend noch zu erläuternde, erfindungsgemäße Sitzkissen, mit einem gemeinsamen Sitzbezug bezogen.

Der Erfindung liegt die Aufgabe zugrunde, ein Sitzkissen der eingangs genannten Art zu verbessern. Insbesondere soll ein besser wiederverwertbares Sitzkissen geschaffen werden, das aber trotzdem dauerhaft sein ursprüngliche Form beibehält.

Diese Aufgabe ist mit einem Sitzkissen der eingangs genannten Art durch die im Kennzeichen des Patentanspruchs 1 aufgeführten Merkmale gelöst.

Nach der Erfindung ist also vorgesehen, der erste Polsterkörperteil den zweiten Polsterkörperteil ringförmig umschließend ausgebildet ist.

Mit anderen Worten zeichnet sich die erfindungsgemäße Lösung somit dadurch aus, dass nicht nur der erste Polsterkörperteil, wie beim eingangs genannten Stand der Technik (gemeint ist hier das Patentdokument DE 10 2013 202 688 B4), sondern auch der zweite, den zentralen Sitzbereich bildende Polsterkörperteil aus einem Fasermaterial, nämlich dem Zusatzfasermaterial, gebildet ist. Dabei weist, worauf weiter unten noch genauer eingegangen wird, das (vorzugsweise natürlich vom Sitzbezug abgedeckte) Zusatzfasermaterial zwar bei einer dreidimensionalen Verformung eine weniger schöne, weil recht grobstrukturierte Oberfläche auf, es ist dafür aber dauerhaft formbeständig, was so für das nicht im zentralen Sitzbereich angeordnete, feinstrukturiertere Fasermaterial des ersten Polsterkörperteils regelmäßig nicht gilt (und an dieser Stelle auch nicht gelten muss), wobei das Fasermaterial seinerseits aber besonders gut zur Schaffung einer schönen dreidimensionalen Kontur des Polsterkörpers geeignet ist.

Der vorstehend verwendete Begriff "Fasermaterial" bzw. "Zusatzfasermaterial" umfasst dabei auch sogenanntes Filament, also Fasern mit praktisch unbegrenzter Länge (siehe hierzu auch https://de.wikipedia.org/w/index.php?title=Filament&ol-did=248230101).

Andere vorteilhafte Weiterbildungen des erfindungsgemäßen Sitzkissens ergeben sich aus den abhängigen Patentansprüchen.

Der Vollständigkeit halber wird auch noch auf das weiter abliegende Dokument DE 43 33 544 A1 hingewiesen.

Das erfindungsgemäße Sitzkissen einschließlich seiner vorteilhaften Weiterbildungen gemäß der abhängigen Patentansprüche wird nachfolgend anhand der zeichnerischen Darstellung eines bevorzugten Ausführungsbeispiels näher erläutert.

Es zeigt
- Figur 1: eine Draufsicht auf das erfindungsgemäße Sitzkissen (ohne Bezug);
- Figur 2: im Schnitt entlang der Linie A-A in Figur 1 das Sitzkissen gemäß Figur 1; und
- Figur 3: im Schnitt entlang der Linie B-B in Figur 1 das Sitzkissen gemäß Figur 1.

Das in den Figuren dargestellte Sitzkissen besteht zunächst in bekannter Weise aus einem zum Tragen eines sitzenden Menschen geeigneten Polsterkörper 1, der aus mindestens einem ersten und einem zweiten Polsterkörperteil 1.1, 1.2 gebildet ist, wobei der erste Polsterkörperteil 1.1 aus einem Fasermaterial gebildet ist.

Weiterhin ist, wie ebenfalls an sich bekannt und vorstehend bereits erwähnt, bevorzugt vorgesehen (aber nicht extra dargestellt), dass die beiden Polsterkörperteile 1.1, 1.2 mit einem gemeinsamen Sitzbezug versehen ausgebildet sind. Dieser umschließt die beiden Polsterkörperteile 1.1, 1.2 dabei mindestens teilweise, insbesondere in Richtung eines auf dem Sitzkissen sitzenden Menschen.

Wie aus den Figuren ohne Weiteres ersichtlich, ist bei alledem besonders bevorzugt vorgesehen, dass der Polsterkörper 1 als Teil eines Bürostuhls ausgebildet ist.

Weiterhin ist vorgesehen, dass der zweite, einen zentralen Sitzbereich des Polsterkörpers 1 ausfüllende Polsterkörperteil 1.2 aus einem Zusatzfasermaterial gebildet ist. Dabei geht es letztlich darum, ein Sitzpolster zu schaffen, das insbesondere dort, wo bleibende Verformungen drohen, aus dem vorzugsweise grobstrukturierten Zusatzfasermaterial gebildet ist, im übrigen aber aus dem vorzugsweise feinstrukturierten Fasermaterial besteht.

Noch etwas genauer betrachtet, ist dabei bevorzugt vorgesehen, dass das Fasermaterial als größten Masseanteil, vorzugsweise ausschließlich, Polyethylenterephthalat-Fasern, also PET-Fasern, enthält (siehe hierzu auch https://de.wikipedia.org/w/ index.php?title=Polyethylenterephthalat&oldid=248349860).

Ferner ist bevorzugt vorgesehen, dass das Zusatzfasermaterial als größten Masseanteil, vorzugsweise ausschließlich, thermoplastische Elastomere-Fasern, also TPE-Fasern, enthält (siehe hierzu auch https://de.wikipedia.org/w/index.php?title=Thermoplastische_Elastomere&oldid=244977254). Ganz besonderes bevorzugt ist vorgesehen, dass als Zusatzfasermaterial ein unter dem Markennamen breathair^{®} (siehe hierzu auch https://mobility.indoramaventures.com/products-markets/new-products-corner/ breathair) vertriebenes Fasermaterial verwendet wird.

Dabei ist weiterhin bevorzugt vorgesehen, dass das Fasermaterial dichter als, vorzugsweise doppelt so dicht wie, das Zusatzfasermaterial ausgebildet ist. Im gleichen Kontext ist entsprechend bevorzugt vorgesehen, dass das Fasermaterial, wie erwähnt, vorzugsweise feiner strukturiert als das Zusatzfasermaterial ausgebildet ist, welches dadurch, was den Sitzkomfort fördert, besonders atmungsaktiv ist.

Bezüglich der Herstellung des erfindungsgemäßen Sitzkissens ist ferner bevorzugt vorgesehen, dass wahlweise der erste und/oder der zweite Polsterkörperteil 1.1, 1.2 (vorzugsweise beide) als Faser-Injektions-Formkörper, auch Fiber-Injection-Molding genannt, hergestellt ausgebildet ist.

Bezüglich der Montage des erfindungsgemäßen Sitzkissens ist weiterhin bevorzugt vorgesehen, dass die beiden Polsterkörperteile 1.1, 1.2 erst nach ihrer Herstellung zusammengefügt ausgebildet sind.

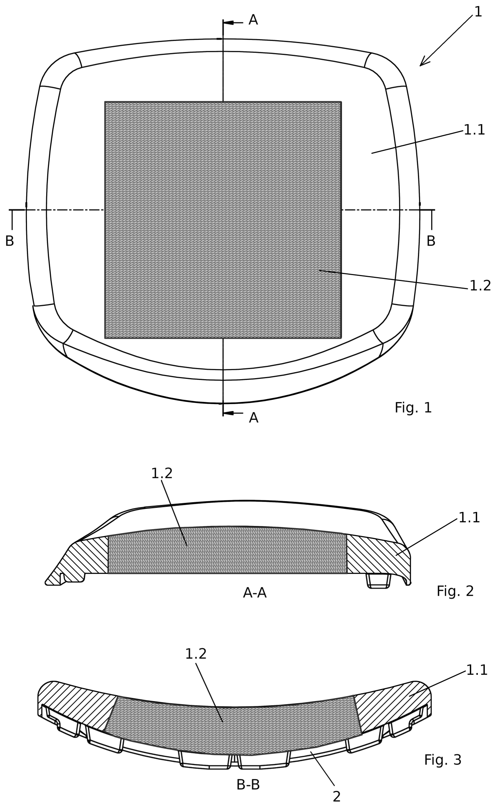

Wesentlich für das erfindungsgemäße Sitzkissen ist nun, dass der erste Polsterkörperteil 1.1 den zweiten Polsterkörperteil 1.2 ringförmig umschließend ausgebildet ist. Die Polsterkörperteile 1.1, 1.2 sind somit nebeneinander und insbesondere nicht gestapelt bzw. ungestapelt, also nicht - wie beim eingangs genannten Stand der Technik - übereinander angeordnet, was, wie sich gezeigt hat, die langfristige Formstabilität des Sitzkissens insbesondere in den entscheidenden bzw. hochbelasteten Bereichen deutlich verbessert. Die beiden Polsterkörperteile 1.1, 1.2 liegen dabei, wie gut aus Figur 3 ersichtlich, bevorzugt auf einer gemeinsamen Auflagefläche 2 auf und lassen sich darüber hinaus am Ende eines Produktlebenzyklus besonders gut sortenrein trennen.

Darüberhinaus ist bevorzugt vorgesehen, dass das erste Polsterkörperteil 1.1 einen Rand von höchstens 10 cm, vorzugsweise höchstens 8 cm, um das zweite Polsterkörperteil 1.2 bildet. Dieser Rand besteht dann vorzugsweise entsprechend aus dem optisch ansprechenderen, aber nicht ganz so formstabilen Fasermaterial.

Schließlich ist bevorzugt vorgesehen, dass das zweite Polsterkörperteil 1.2 mindestens eine (Kern-) Sitzfläche mit einer Größe von mindestens 20 x 20 cm oder mindestens 400 cm², vorzugsweise mindestens 30 x 30 cm oder mindestens 900 cm², bildet. Diese Sitzfläche besteht dann vorzugsweise entsprechend aus dem optisch weniger ansprechenderen, aber dafür sehr formstabilen Zusatzfasermaterial.

### Bezugszeichenliste

- 1: Polsterkörper
- 1.1: erster Polsterkörperteil
- 1.2: zweiter Polsterkörperteil
- 2: Auflagefläche

## Patentansprüche

1. Sitzkissen, umfassend einen zum Tragen eines sitzenden Menschen geeigneten Polsterkörper (1), der aus mindestens einem ersten und einem zweiten Polsterkörperteil (1.1, 1.2) gebildet ist, wobei der erste Polsterkörperteil (1.1) aus einem Fasermaterial gebildet ist, wobei der zweite, einen zentralen Sitzbereich des Polsterkörpers (1) ausfüllende Polsterkörperteil (1.2) aus einem Zusatzfasermaterial gebildet ist,
**dadurch gekennzeichnet,**
**dass** der erste Polsterkörperteil (1.1) den zweiten Polsterkörperteil (1.2) ringförmig umschließend ausgebildet ist.

2. Sitzkissen nach Anspruch 1,
**dadurch gekennzeichnet,**
**dass** das Fasermaterial als größten Masseanteil Polyethylenterephthalat-Fasern enthält.

3. Sitzkissen nach Anspruch 1oder 2,
**dadurch gekennzeichnet,**
**dass** das Zusatzfasermaterial als größten Masseanteil, vorzugsweise ausschließlich, thermoplastische Elastomere-Fasern enthält.

4. Sitzkissen nach einem der Ansprüche 1 bis 3,
**dadurch gekennzeichnet,**
**dass** wahlweise der erste und/oder der zweite Polsterkörperteil (1.1, 1.2) als Faser-Injektions-Formkörper hergestellt ausgebildet ist.

5. Sitzkissen nach einem der Ansprüche 1 bis 4,
**dadurch gekennzeichnet,**
**dass** das Fasermaterial dichter als das Zusatzfasermaterial ausgebildet ist.

6. Sitzkissen nach einem der Ansprüche 1 bis 5,
**dadurch gekennzeichnet,**
**dass** die beiden Polsterkörperteile (1.1, 1.2) erst nach ihrer Herstellung zusammengefügt ausgebildet sind.

7. Sitzkissen nach einem der Ansprüche 1 bis 6,
**dadurch gekennzeichnet,**
**dass** das erste Polsterkörperteil (1.1) einen Rand von mindestens 5 cm um das zweite Polsterkörperteil (1.2) bildet.

8. Sitzkissen nach einem der Ansprüche 1 bis 7,
**dadurch gekennzeichnet,**
**dass** das zweite Polsterkörperteil (1.2) mindestens eine Sitzfläche mit einer Größe von 225 cm² bildet.
